# DEMANDE DE BREVET EUROPEEN

(11) **EP 1 650 996 A1**
(43) Date de publication de la demande: **26.04.2006**
(21) Numéro de dépôt: 05109690.7
(22) Date de dépôt: 18.10.2005
(51) Int. Cl.: H04Q 7/36

(54) **Serveur de gestion pour la détermination de cartographies de qualité de service perçue au sein d'un réseau de communication mobile**

(30) Priorité: 20.10.2004 FR 0411182
(71) Demandeur: ALCATEL, 75008 Paris (FR)
(72) Inventeur: Betge-Brezetz, Stéphane, 75015 Paris (FR); Delegue, Gérard, 94230 Cachan (FR); Gonguet, Arnaud, 75013 Paris (FR); Robinson, Julien, 75014 Paris (FR); Fournigault, Lionel, 91190 Gif Sur Yvette (FR)
(74) Mandataire: Chaffraix, Sylvain

(57) **Abrégé**

Un serveur de gestion (SG), d'un réseau de communication cellulaire, comprend des moyens de traitement (MT) chargés de déterminer la cartographie de la qualité de service au sein de certaines au moins des cellules (C1-C3) du réseau, à partir d'informations, transmises audit réseau par certains au moins des terminaux mobiles (UE1-UE3) ayant établis des liaisons radio au sein de ces cellules (C1-C3), et représentatives de la valeur prise par au moins un paramètre de qualité de service sur ces liaisons et des identifiants des cellules dans lesquelles sont situés lesdits terminaux mobiles correspondants (UE1-UE3).

## Description

L'invention concerne les réseaux de communication mobiles (ou cellulaires), et plus précisément le contrôle de la qualité de service dans de tels réseaux.

Les opérateurs des réseaux de communication mobiles et les fabricants de terminaux mobiles mettent à la disposition de leurs clients un nombre sans cesse croissant de services et d'applications, ce qui rend de plus en plus indispensable le contrôle de la qualité de service (ou QoS), ainsi que l'analyse des performances.

Ce contrôle nécessite des cartographies de la qualité de service au sein des réseaux mobiles, de manière à déterminer les cellules dans lesquelles la couverture radio doit être améliorée, à suivre l'évolution de la qualité de service et à vérifier si les réseaux mobiles assurent effectivement les services qui ont été définis dans des accords de niveau de service (ou SLAs pour « Service Level Agreements ») passés avec les clients des opérateurs.

Pour obtenir ces cartographies de qualité de service au moins deux techniques ont été proposées.

Une première technique consiste à collecter des valeurs de « compteurs » auprès de différents équipements de réseau, comme par exemple les stations de base (BTSs ou Node Bs) ou les contrôleurs de réseau radio (RNCs ou BSCs), puis à agréger ces valeurs afin de fournir des indicateurs représentatifs de la qualité de service au sein des différentes cellules du réseau et à partir desquels sont constituées les cartographies.

L'inconvénient principal de cette première technique réside dans le fait que les valeurs collectées des compteurs et donc les indicateurs (qui sont indispensables à la gestion des performances du réseau) sont représentatives de la qualité de service observée par les équipements de réseau et non celle effectivement perçue par les terminaux mobiles des clients (ou « utilisateurs finaux »).

Une seconde technique consiste à utiliser des techniciens pour mesurer manuellement, à l'aide d'instruments de test (ou « drive tests »), en au moins un endroit de certaines cellules du réseau, la valeur d'un paramètre représentatif de la qualité de service, comme par exemple l'intensité d'un signal radio reçu, puis à constituer les cartographies au moyen de ces mesures manuelles.

Cette seconde technique permet certes d'obtenir des informations représentatives de la qualité de service effectivement perçue, mais elle est onéreuse, nécessite une quantité importante de travail, et n'est pas exhaustive du fait que toutes les cellules ne peuvent pas être testées et qu'il est rarement possible d'effectuer plusieurs mesures en différents endroits des cellules testées. En outre, cette seconde technique ne permet pas une mise à jour régulière de la cartographie et ne peut donc pas être utilisée pour contrôler l'évolution de la qualité de service.

Une troisième approche a été envisagée par la demande de brevet WO03/081883 qui propose de prendre en compte des informations de mesures transmises par des terminaux portables pour construire une vue globale du réseau mobile, notamment sous une forme graphique.

Mais cet état de l'art est passif, en ce sens que les moyens de gestion ne permettent pas d'influer sur la nature et la quantité des informations de mesures transmises par les terminaux, de sorte qu'aucune stratégie de cartographie ne peut être mise en oeuvre.

Aucune technique connue n'apportant une entière satisfaction, l'invention a donc pour but d'améliorer la situation.

Elle propose à cet effet un serveur de gestion, pour un réseau mobile (cellulaire), comprenant des moyens de traitement chargés de déterminer la cartographie de la qualité de service au sein de certaines au moins des cellules du réseau, à partir d'informations, transmises audit réseau par certains au moins des terminaux mobiles ayant établis des liaisons radio au sein de ces cellules, et représentatives de la valeur prise par au moins un paramètre de qualité de service sur ces liaisons et des identifiants des cellules dans lesquelles sont situés lesdits terminaux mobiles correspondants.

Le serveur de gestion selon l'invention peut comporter d'autres caractéristiques qui peuvent être prises séparément ou en combinaison, et notamment :
- des moyens de gestion chargés de définir une stratégie de cartographie en fonction d'au moins un paramètre de configuration, comme par exemple (et de façon non limitative) la désignation des cellules objet de la cartographie et/ou la périodicité de la cartographie et/ou le nombre de terminaux mobiles transmetteurs par cellule et/ou la périodicité des transmissions,
- des moyens d'interrogation chargés de générer, à des instants choisis (par exemple en fonction de chaque paramètre de configuration définissant la stratégie de cartographie), des messages destinés à certains au moins des terminaux mobiles transmetteurs et requérant de leur part la transmission des informations,
- ses moyens de traitement peuvent être chargés de déterminer chaque cartographie par combinaison de données de portions de cartographie associées chacune à une cellule choisie. Dans ce cas, le serveur peut également comprendre des moyens de mémorisation destinés à stocker les données représentatives de chaque portion de cartographie (déterminée par les moyens de traitement) en correspondance de la cellule associée,
- ses moyens de traitement peuvent être chargés de déduire les vitesses de déplacement des terminaux mobiles à partir des informations qu'ils transmettent successivement au réseau, puis de déterminer des cartographies par exemple représentatives de la qualité de réception en fonction de ces vitesses de déplacement déduites,
- les moyens d'interrogation peuvent être chargés de stocker dans les moyens de mémorisation chaque paramètre de configuration définissant chaque stratégie de cartographie,
- des moyens d'interface chargés d'extraire des moyens de mémorisation des données représentatives d'une cartographie, de manière à les délivrer de façon combinée à des données représentatives d'une carte des cellules du réseau, en vue de leur affichage,

> ces moyens d'interface peuvent être agencés pour accéder aux moyens de mémorisation afin de confronter les données stockées d'une cartographie aux paramètres qui définissent la stratégie correspondante, de manière à déterminer si cette cartographie correspond à cette stratégie, et à délivrer des données représentatives du résultat de chaque confrontation, puis éventuellement à stocker dans les moyens de mémorisation des données représentatives du résultat de chaque confrontation,
> ces moyens d'interface peuvent être agencés pour extraire des moyens de mémorisation les données représentatives d'un résultat de confrontation en vue de leur affichage,
> ces moyens d'interface peuvent être agencés pour extraire des moyens de mémorisation des données à afficher associées à un paramètre temporel représentatif de leur date de stockage,

- les paramètres de qualité de service peuvent être de tout type. Il peut s'agir par exemple de l'intensité du signal reçu sur une liaison, de la valeur d'une mesure de performance de type bout-en bout (ou « end-to-end »), comme par exemple le délais d'accès à un serveur, d'une information de débit disponible au niveau de la connexion radio, ou d'une information de charge (CPU et/ou mémoire) d'un terminal mobile,
- lorsque certaines informations transmises au réseau sont représentatives de la localisation du terminal mobile transmetteur, les moyens de traitement peuvent être agencés de manière à déterminer certaines au moins des cartographies à partir des informations de localisation reçues,
- lorsque certaines informations transmises au réseau sont représentatives du type et/ou de la version du terminal mobile transmetteur et/ou de l'état de charge de la batterie du terminal mobile transmetteur, les moyens de traitement peuvent être agencés de manière à déterminer certaines au moins des cartographies à partir des informations de type et/ou de version et/ou d'état de charge. Dans ce cas, les moyens de traitement peuvent être agencés de manière à stocker les données représentatives des cartographies, dans les moyens de mémorisation, en correspondance des informations de type et/ou de version et/ou d'état de charge.

L'invention propose également un système de gestion de réseau (ou NMS pour « Network Management System ») pour un réseau de communication mobile (cellulaire) équipé d'un serveur de gestion du type de celui présenté ci-avant.

L'invention est particulièrement bien adaptée, bien que de façon non exclusive, aux réseaux de communication mobiles de types GSM, GPRS/EDGE, UMTS, WIFI et WIMAX, ainsi qu'à tous les réseaux mobiles équivalents.

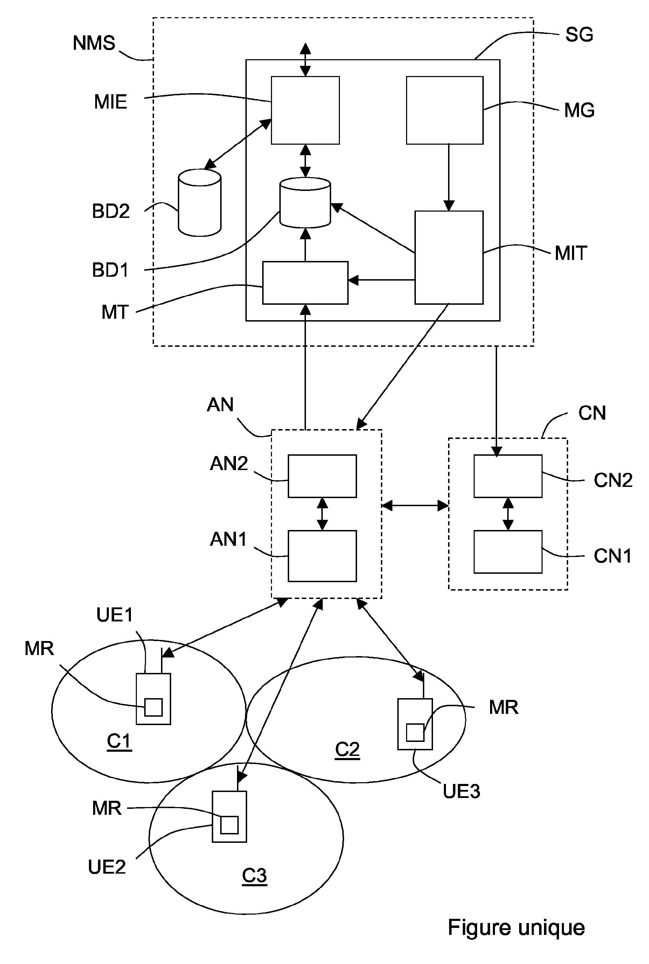

D'autres caractéristiques et avantages de l'invention apparaîtront à l'examen de la description détaillée ci-après, et du dessin annexé, sur lequel l'unique figure illustre de façon très schématique un réseau mobile (cellulaire) équipé d'un exemple de réalisation d'un serveur de gestion selon l'invention. Le dessin annexé pourra non seulement servir à compléter l'invention, mais aussi contribuer à sa définition, le cas échéant.

L'invention a notamment pour objet de permettre le contrôle de la qualité de service effectivement perçue par des terminaux mobiles au sein de réseaux de communication mobiles (cellulaires).

Dans ce qui suit, on considère à titre d'exemple non limitatif que le réseau mobile est un réseau cellulaire de communication de type 3G, tel qu'un réseau UMTS. Mais, l'invention n'est pas limitée à ce type de réseau. Elle concerne en effet tous les réseaux de communication mobiles (ou cellulaires), et notamment ceux de type 2G, comme les réseaux de type GSM, 2,5G, comme les réseaux GPRS ou EDGE, 4G, WIFI et WIMAX.

Par ailleurs, on entend ici par « terminal mobile » tout terminal de communication mobile ou portable capable d'échanger des données sous la forme de signaux radio, soit avec un autre terminal ou équipement de réseau, via leur(s) réseau(x) de rattachement, soit avec son propre réseau de rattachement. Il pourra donc s'agir, par exemple, de téléphones mobiles, ou d'ordinateurs fixes ou portables ou d'assistants personnels numériques (ou PDA) équipés d'un module de communication radio. Dans la description qui suit, on considère, à titre d'exemple non limitatif, que les terminaux mobiles sont des téléphones mobiles.

Comme illustré sur l'unique figure, un réseau radio peut, d'une façon très schématique mais néanmoins suffisante à la compréhension de l'invention, être résumé à un coeur de réseau (ou « Core Network ») CN couplé à un réseau d'accès radio AN (appelé UTRAN dans le cas d'un réseau UMTS et BSS dans le cas d'un réseau GSM), lui-même raccordé à un système de gestion de réseau NMS (pour « Network Management System »).

Le réseau d'accès radio AN comporte un ensemble AN1 de stations de base (appelées Node Bs dans le cas d'un réseau UMTS et BTSs dans le cas d'un réseau GSM) et de contrôleurs de réseau radio ou noeuds (appelés RNCs dans le cas d'un réseau UMTS et BSCs dans le cas d'un réseau GSM), raccordés entre eux, et un gestionnaire de réseau d'accès AN2 raccordé à l'ensemble AN1. Le système de gestion de réseau NMS est par ailleurs relié aux stations de base via les contrôleurs de réseau radio.

Chaque station de base (Node B ou BTS) est associée à au moins une cellule Ci couvrant une zone radio dans laquelle des téléphones mobiles UEi peuvent établir (ou poursuivre) des liaisons radio.

Dans l'exemple illustré, trois cellules (C1-C3, i = 1 à 3) ont été représentées. Mais, l'indice i peut prendre n'importe quelle valeur non nulle.

Le coeur de réseau CN comprend un ensemble d'équipements de réseau CN1, raccordé aux contrôleurs de réseau radio (RNCs ou BSCs) de l'ensemble AN1, ainsi qu'un gestionnaire de coeur de réseau CN2 raccordé à l'ensemble CN1. Le système de gestion de réseau NMS est par ailleurs relié au gestionnaire de coeur de réseau CN2.

Afin de permettre le contrôle de la qualité de service effectivement perçue par les terminaux mobiles UEi au sein du réseau mobile, l'invention propose un serveur de gestion SG.

Comme illustré, le serveur de gestion SG est préférentiellement intégré dans le système de gestion de réseau NMS, mais il pourrait également être implanté dans un équipement de réseau raccordé à ce dernier ou dans un boîtier dédié destiné à être raccordé au système de gestion de réseau NMS.

Le serveur de gestion SG selon l'invention comprend au moins un module de traitement MT alimenté par les informations provenant de certains téléphones mobiles UEi, adaptés à cet effet et ayant établis des liaisons radio au sein de certaines cellules Ci du réseau, via le réseau d'accès AN et le système de gestion de réseau NMS, en données d'informations (ou plus simplement informations) représentatives, d'une part, de la valeur prise sur ces liaisons par au moins un paramètre de qualité de service, et d'autre part, des identifiants des cellules Ci dans lesquelles sont situés les téléphones mobiles transmetteurs UEi.

Les terminaux mobiles UE, qui transmettent les informations utiles à la cartographie, sont équipés d'un module de compte-rendu MR (ou « reporting module ») chargé de déterminer en interne la valeur d'au moins un paramètre représentatif de la qualité de service perçue lorsqu'une liaison est établie, et d'ordonner la transmission d'un message de compte-rendu, comportant chaque valeur déterminée, à destination du serveur de gestion SG.

Ce module de compte-rendu MR peut être réalisé sous la forme de circuits électroniques, de modules logiciels (ou informatiques), ou d'une combinaison de circuits et de logiciels.

Lorsqu'il est exclusivement composé de modules logiciels, il peut être éventuellement transmis aux téléphones mobiles UEi par le réseau, à la requête de son gestionnaire ou bien de façon automatisée lors de sa première utilisation. En variante, il peut être initialement implanté dans le téléphone mobile UEi et activé à distance par l'opérateur.

Le module de compte-rendu MR peut par exemple être implanté dans la carte SIM du téléphone mobile UEi, laquelle est sécurisée mais indépendante du téléphone mobile UEi, ou bien dans le système d'exploitation (ou OS pour « Operating System ») du téléphone mobile UEi, ou encore dans une application située au-dessus du système d'exploitation du téléphone mobile UEi, par exemple sous la forme d'une machine virtuelle Java (ou JVM pour « Java Virtual Machine »).

Les informations transmises sont par exemple représentatives de l'intensité du signal reçu par le téléphone mobile UEi sur la liaison qu'il a établie, et/ou de la valeur d'une mesure de performance de type bout-en bout (ou « end-to-end ») sur la liaison qu'il a établie avec un terminal mobile distant ou avec un serveur du réseau (éventuellement le serveur de gestion SG selon l'invention). Les mesures de type bout-en bout sont par exemple représentatives du délai de transmission, ou du taux de perte, ou encore du délai d'accès au serveur.

Mais, toute autre information peut être envisagée, et notamment une information de débit disponible au niveau de la connexion radio, ou une information représentative de la charge de calcul (ou CPU) et/ou de la charge de mémoire du terminal mobile UEi.

On considère dans ce qui suit, à titre d'exemple non limitatif, qu'un seul paramètre fait l'objet des comptes-rendus et qu'il s'agit de l'intensité du signal reçu. Mais, on peut envisager qu'il s'agisse d'un autre paramètre, ou que plusieurs paramètres fassent l'objet des comptes-rendus.

Les informations transmises par un téléphone mobile UEi peuvent également, lorsque celui-ci dispose d'une fonction de localisation géographique, être accompagnées de données représentatives de sa position géographique. Plusieurs solutions peuvent être envisagées pour déterminer la position du téléphone mobile UEi. En effet, ce dernier peut par exemple être équipé d'un module de localisation de type GPS (pour « Global Positioning System » - positionnement par satellite), ou bien d'un module de localisation intracellulaire, ou encore d'un module de localisation par triangulation intercellulaire, en particulier lorsque le réseau est de type UMTS.

Lorsque le module de traitement MT reçoit les informations précitées, il les analyse afin de les regrouper en fonction des cellules dans lesquelles elles ont été déterminées par les téléphones mobiles transmetteurs UEi. Puis, il les agrége (ou combine) de manière à délivrer des données représentatives de la qualité de service perçue dans chaque cellule Ci (et qui définissent des portions de cartographie de qualité de service associées chacune à une cellule Ci) et/ou des données représentatives de la qualité de service perçue dans toutes les cellules (et qui définissent une cartographie complète).

Le module de traitement MT peut disposer d'une ou plusieurs valeurs d'un ou plusieurs paramètres pour une même cellule Ci, comme par exemple le délai et le taux de perte.

Lorsque le module de traitement MT ne dispose que d'une seule valeur pour chaque paramètre d'une cellule Ci, il délivre une donnée de qualité de service égale à chaque valeur de paramètre reçue du téléphone mobile transmetteur UEi. Lorsqu'il dispose de plusieurs valeurs d'un même paramètre pour une cellule Ci, il délivre une donnée de qualité de service égale à la moyenne des valeurs reçues. Dans ce dernier cas, les données correspondant à une même cellule Ci peuvent provenir soit d'un même téléphone mobile UEi (à des instants différents), soit de téléphones mobiles différents (situés dans cette cellule Ci). Une moyenne au sein d'une cellule Ci peut être également faite en fonction, notamment, des types des téléphones mobiles transmetteurs UEi et/ou de l'état de charge de leurs batteries.

Lorsque les téléphones mobiles UEi disposent d'une fonction de localisation géographique, les cartographies (ou portions de cartographie) délivrées par le module de traitement MT peuvent tenir compte des positions des téléphones mobiles au sein des cellules Ci dans lesquelles ils sont momentanément situés. On dispose ainsi de cartographies plus précises permettant de détecter des disparités de qualité de service intracellulaires et pas seulement intercellulaires.

On peut également envisager que le module de compte-rendu MR soit agencé de manière à intégrer dans ses messages de compte-rendu des informations complémentaires, par exemple représentatives du type et/ou de la version du téléphone mobile UEi dans lequel il est implanté et/ou de l'état de charge de la batterie dudit téléphone mobile UEi.

Dans ce cas, le module de traitement MT peut déterminer certaines au moins des cartographies (ou portions de cartographie) à partir des informations représentatives des valeurs des paramètres de qualité de service et des informations de type et/ou de version et/ou d'état de charge des téléphones mobiles UEi desquels il a reçu des messages de compte-rendu. Il peut ainsi établir des cartographies de qualité de service fonction d'un ou plusieurs types et/ou versions de téléphone mobile et/ou de l'état de charge de la batterie.

On peut également envisager que le module de traitement MT soit agencé de manière à déduire des informations, contenues dans des messages de compte-rendu successifs provenant d'un même téléphone mobile UEi, la vitesse de déplacement dudit téléphone mobile UEi. La vitesse peut en effet être approximée grossièrement, par exemple en fonction du nombre de cellules traversées pendant un intervalle de temps donné et des dimensions des cellules traversées. Les performances de transfert intercellulaire sans coupure (ou « handover ») peuvent être ainsi analysées grossièrement puisqu'il est désormais possible d'obtenir une cartographie de la qualité de réception en fonction de la vitesse, notamment.

L'invention concerne aussi bien les handovers de type horizontal, c'est-à-dire entre des cellules appartenant à une même technologie (par exemple GSM), que les handovers de type vertical, c'est-à-dire entre des cellules appartenant à des technologies différentes (par exemple GSM et UMTS).

Il est important de noter que tout type de croisement d'informations peut être envisagé de manière à établir une cartographie de la qualité de service. On peut ainsi établir une cartographie de la qualité de service en fonction d'un événement et/ou d'un jour et/ou d'un horaire et/ou d'une zone géographique particulière. Par exemple, on peut établir une cartographie de la qualité de service en fonction des appels d'un téléphone mobile dans certaines zones géographiques.

Le serveur de gestion SG comprend préférentiellement une mémoire BD1, par exemple agencée sous la forme d'une base de données, et couplée au module de traitement MT afin qu'il puisse y stocker les données de cartographie et/ou de portions de cartographie qu'il a déterminées, éventuellement en correspondance d'information(s) complémentaire(s), comme par exemple le type et/ou la version des téléphones mobiles transmetteurs, l'état de charge de la batterie des téléphones mobiles transmetteurs, et/ou la date.

A ce stade, une cartographie peut être considérée comme un tableau dans lequel chaque identifiant de cellule Ci, de laquelle est issue au moins un message de compte-rendu, est associé à au moins une valeur de paramètre de qualité de service. Bien entendu, certains identifiants de cellules peuvent être associés à plusieurs valeurs de paramètre de qualité de service lorsque ces dernières sont elles-mêmes associées chacune à une position géographique précise.

Le serveur de gestion SG peut également comporter un module d'interface MIE couplé à la mémoire BD1 afin de permettre au gestionnaire du réseau de visualiser les cartographies et les informations (ou données) associées qui s'y trouvent stockées.

Le module d'interface MIE est préférentiellement couplé à une autre mémoire BD2 dans laquelle se trouvent stockées des données représentatives de la carte matérialisant les emplacements géographiques des cellules Ci du réseau. En accédant aux mémoires BD1 et BD2 le module d'interface MIE peut combiner (ou superposer) les données définissant une cartographie (ou des portions de cartographie), requise par le gestionnaire, avec les données définissant la carte des cellules, permettant ainsi de visualiser la cartographie sur la carte des cellules.

Le module d'interface MIE peut également permettre différents couplages entre les informations relatives aux cartes du réseau, stockées dans la mémoire BD2, et les données des cartographies de qualité de service, stockées dans la mémoire BD1. Ainsi, on peut envisager de coupler des informations relatives à la hauteur d'immeubles présents dans une partie d'une cellule Ci avec des données de qualité de service obtenues dans cette même partie de la cellule Ci par un ou plusieurs téléphones mobiles UEi, de manière à déterminer si un immeuble élevé nuit localement à la qualité de service.

On peut envisager que le module de compte rendu MR, implanté dans les téléphones mobiles UEi, soit agencé de manière à transmettre automatiquement des messages contenant chaque valeur de paramètre de qualité de service. Une telle transmission peut se faire périodiquement, ou bien chaque fois que le téléphone mobile UEi est mis sous tension, ou encore chaque fois que le téléphone mobile UEi pénètre dans une nouvelle cellule Ci.

Mais, en variante (ou en complément) le module de compte rendu MR, implanté dans les téléphones mobiles UEi, peut être également agencé de manière à transmettre un message, contenant les informations représentatives de chaque valeur de paramètre de qualité de service et de l'identifiant de cellule associé, chaque fois qu'il reçoit un message dédié provenant du serveur de gestion SG (ou du réseau d'accès radio AN (UTRAN ou BSS)) et requérant la transmission desdites informations.

A cet effet, le serveur de gestion SG peut également comporter un module de gestion MG chargé de définir une stratégie de cartographie et couplé à un module d'interrogation MIT chargé de générer les messages dédiés requérant de certains au moins des téléphones mobiles UEi, équipés d'un module de compte rendu MR, qu'ils transmettent leurs informations de cartographie.

Plus précisément, le module de gestion MG est chargé de définir une stratégie de cartographie en fonction d'au moins un paramètre de configuration. Par exemple, une stratégie de cartographie peut être définie par la désignation d'une ou plusieurs cellules Ci du réseau et/ou par une périodicité de cartographie (heure et/ou jour et/ou semaine et/ou mois) et/ou par le nombre de terminaux mobiles UEi devant transmettre leurs informations de cartographie dans chaque cellule désignée pour que le résultat de la cellule soit pris en compte et/ou par la périodicité des transmissions d'informations de cartographie par les terminaux mobiles UEi situés dans chaque cellule Ci désignée et/ou par les types des téléphones mobiles UEi, de manière à déterminer la cartographie de la qualité de service en fonction d'un ou plusieurs types de téléphones mobiles, et/ou par les types de service utilisés (voix, vidéo, et analogue) et/ou les types de contrat client/opérateur (or/argent/bronze). Il ne s'agit ici que d'exemples non limitatifs. D'autres critères ou paramètres peuvent en effet être utilisés pour définir une stratégie de cartographie.

Le module d'interrogation MIT est alors chargé de générer les messages dédiés à des instants choisis et à destination de téléphones mobiles UEi choisis (éventuellement tous ceux équipés d'un module de compte rendu MR), en fonction de chaque paramètre de configuration définissant la stratégie de cartographie élaborée par le module de gestion MG.

Bien entendu, on peut envisager que le serveur de gestion SG ne comporte pas de module de gestion MG, mais simplement un module d'interrogation MIT chargé, par exemple, de générer les messages dédiés de façon automatique, par exemple périodiquement et à destination de groupes de téléphones mobiles UEi prédéfinis (éventuellement tous), ou bien à la requête du gestionnaire du réseau.

Lorsque le module d'interrogation MIT est couplé à un module de gestion MG, il est alors également et préférentiellement couplé à la mémoire BD1 afin d'y stocker les données représentatives de la stratégie de configuration élaborée par le module de gestion MG. Il est également couplé au module de traitement MT afin de lui fournir les données définissant la stratégie de configuration qui va lui permettre de déterminer une cartographie ou des portions de cartographie (notamment lorsque des valeurs moyennes de paramètre de qualité de service doivent être obtenues sur certaines cellules Ci).

Ainsi, le module d'interface MIE peut, lorsqu'il accède à la mémoire BD1, à la requête du gestionnaire du réseau, extraire les données représentatives d'une cartographie choisie et les données représentatives de la stratégie de configuration ayant permis d'obtenir cette cartographie choisie, afin de déterminer si ladite cartographie satisfait à l'objectif défini par ladite stratégie de configuration. Une cartographie peut en effet ne pas satisfaire à un objectif fixé du fait qu'aucun message de compte rendu n'a été reçu en provenance d'une ou plusieurs cellules Ci, et/ou que le module de traitement MT n'a pas pu déterminer de valeur de qualité de service pour une ou plusieurs cellules Ci par ce que le nombre de messages de compte rendu reçu en provenance de cette (ces) cellules ne correspondait pas à la stratégie de configuration fixée.

Le résultat d'une confrontation d'une cartographie à la stratégie de configuration dont elle est issue peut être délivré par le module d'interface MIE afin d'être affiché sur un écran du gestionnaire de réseau.

Le module d'interface MIE peut également et éventuellement stocker dans la mémoire BD1 le résultat de la confrontation d'une cartographie à la stratégie de configuration dont elle est issue, en vue d'une utilisation ultérieure.

D'une manière générale, le module d'interface MIE peut être agencé de manière à fournir, en vue d'un affichage, n'importe quelle cartographie et n'importe quelle analyse relative à une ou plusieurs cartographies, compte tenu des éventuelles données associées stockées et/ou de données additionnelles, comme par exemple la météorologie.

Des corrélations peuvent ainsi être effectuées afin de déterminer la (les) cause(s) d'une dégradation de qualité de service.

Le serveur de gestion SG selon l'invention, et notamment son module de gestion MG, son module d'interrogation MIT, son module de traitement MT et son module d'interface MIE, peuvent être réalisés sous la forme de circuits électroniques, de modules logiciels (ou informatiques), ou d'une combinaison de circuits et de logiciels.

Grâce à l'invention, il est désormais possible de disposer de cartographies de la qualité de service effectivement perçue par les terminaux mobiles UEi. Par ailleurs, l'invention permet de fournir automatiquement et rapidement, au gestionnaire d'un réseau, des cartographies partielles ou complètes de son réseau, ainsi que des mises à jour aussi souvent qu'il le souhaite.

On notera qu'il est également possible de corréler des informations de qualité de service relatives aux clients (« end user »), obtenues au moyen de l'invention, à d'autres informations de qualité de service provenant par exemple du coeur de réseau CN ou d'un fournisseur de service (lequel peut être éventuellement la cause d'une dégradation de qualité de service perçue par un téléphone mobile).

De plus, les informations de qualité de service obtenues au moyen de l'invention peuvent par exemple servir à détecter des zones dans lesquelles la qualité de service est dégradée, afin d'y effectuer des campagnes de tests manuels (ou « drive tests ») destinées à obtenir des mesures plus précises.

L'invention ne se limite pas aux modes de réalisation de serveur de gestion et de système de gestion de réseau décrits ci-avant, seulement à titre d'exemple, mais elle englobe toutes les variantes que pourra envisager l'homme de l'art dans le cadre des revendications ci-après.

## Revendications

1. Serveur de gestion (SG) pour un réseau de communication mobile comportant des cellules (Ci) dans lesquelles des terminaux mobiles de communication (UEi) peuvent établir des liaisons radio, **caractérisé en ce qu'**il comprend des moyens de traitement (MT) agencés pour déterminer une cartographie d'une qualité de service au sein de certaines au moins desdites cellules (Ci), à partir d'informations transmises audit réseau par certains au moins desdits terminaux mobiles (UEi), lorsqu'ils ont établi des liaisons radio au sein desdites cellules (Ci), et représentatives de la valeur prise par au moins un paramètre de qualité de service sur lesdites liaisons et des identifiants des cellules dans lesquelles sont situés lesdits terminaux mobiles correspondants (UEi), et **en ce qu'**il comprend des moyens de gestion (MG) propres à définir une stratégie de cartographie en fonction d'au moins un paramètre de configuration.

2. Serveur selon la revendication précédente, **caractérisé en ce que** ledit paramètre de configuration est choisi dans un groupe comprenant au moins la désignation des cellules (Ci) objet de ladite cartographie et/ou la périodicité de ladite cartographie et/ou le nombre de terminaux mobiles transmetteurs (UEi) par cellule et/ou la périodicité des transmissions et/ou le(s) type(s) des téléphones mobiles (UEi), et/ou le(s) type(s) de service utilisé et/ou le(s) type(s) de contrat client/opérateur.

3. Serveur selon l'une des revendications 1 et 2, **caractérisé en ce qu'**il comprend des moyens d'interrogation (MIT) agencés pour générer à des instants choisis des messages destinés à certains au moins desdits terminaux mobiles transmetteurs (UEi) et requérant de leur part la transmission desdites informations.

4. Serveur selon la revendication 3 en combinaison avec l'une des revendications 1 et 2, **caractérisé en ce que** lesdits instants sont choisis en fonction de chaque paramètre de configuration définissant ladite stratégie de cartographie.

5. Serveur selon l'une des revendications 1 à 4, **caractérisé en ce que** lesdits moyens de traitement (MT) sont agencés pour déterminer chaque cartographie par combinaison de données de portions de cartographie associées à chaque cellule concernée (Ci), et **en ce qu'**il comprend des moyens de mémorisation (BD1) propres à stocker les données représentatives de chaque portion de cartographie déterminée par lesdits moyens de traitement (MT) en correspondance de la cellule associée (Ci).

6. Serveur selon la combinaison des revendications 4 et 5, **caractérisé en ce que** lesdits moyens d'interrogation (MIT) sont agencés pour stocker dans lesdits moyens de mémorisation (BD1) chaque paramètre de configuration définissant chaque stratégie de cartographie.

7. Serveur selon l'une des revendications 1 à 6, **caractérisé en ce qu'**il comprend des moyens d'interface (MIE) agencés pour extraire desdits moyens de mémorisation (BD1) des données représentatives de chaque cartographie, de manière à les délivrer de façon combinée à des données représentatives d'une carte des cellules (Ci) dudit réseau, en vue de leur affichage.

8. Serveur selon la revendication 7 en combinaison avec l'une des revendications 5 et 6, **caractérisé en ce que** lesdits moyens d'interface (MIE) sont agencés pour accéder auxdits moyens de mémorisation (BD1) pour confronter une cartographie stockée aux paramètres définissant ladite stratégie correspondante, de manière à déterminer si ladite cartographie correspond à ladite stratégie, puis à délivrer le résultat de ladite confrontation.

9. Serveur selon la revendication 8, **caractérisé en ce que** lesdits moyens d'interface (MIE) sont agencés pour stocker dans lesdits moyens de mémorisation (BD1) des données représentatives du résultat d'une confrontation.

10. Serveur selon l'une des revendications 7 à 9 en combinaison avec l'une des revendications 5 et 6, **caractérisé en ce que** lesdits moyens d'interface (MIE) sont agencés pour extraire desdits moyens de mémorisation (BD1) des données représentatives d'un résultat de comparaison en vue de leur affichage.

11. Serveur selon l'une des revendications 7 à 10 en combinaison avec l'une des revendications 5 et 6, **caractérisé en ce que** lesdits moyens d'interface (MIE) sont agencés pour extraire desdits moyens de mémorisation (BD1) des données à afficher associées à un paramètre temporel représentatif de leur date de stockage.

12. Serveur selon l'une des revendications 1 à 11, **caractérisé en ce que** chaque paramètre de qualité de service est choisi dans un groupe comprenant au moins l'intensité du signal reçu sur une liaison, la valeur d'une mesure de performance de type bout-en bout, la valeur d'un débit disponible au niveau d'une connexion radio, et la valeur d'une charge de calcul et/ou de mémoire de terminal mobile (UEi).

13. Serveur selon l'une des revendications 1 à 12, **caractérisé en ce que** certaines informations transmises audit réseau sont des informations représentatives de la localisation du terminal mobile transmetteur (UEi), et **en ce que** lesdits moyens de traitement (MT) sont agencés pour déterminer certaines au moins desdites cartographies à partir desdites informations de localisation.

14. Serveur selon l'une des revendications 1 à 13, **caractérisé en ce que** lesdits moyens de traitement (MT) sont agencés pour déduire des vitesses de déplacement de terminaux mobiles (UEi) à partir des informations qu'ils transmettent successivement

15. Serveur selon la revendication 14, **caractérisé en ce que** lesdits moyens de traitement (MT) sont agencés pour déterminer des cartographies représentatives de la qualité de réception en fonction desdites vitesses de déplacement déduites.

16. Serveur selon l'une des revendications 1 à 15, **caractérisé en ce que** certaines informations transmises audit réseau sont des informations représentatives du type et/ou de la version du terminal mobile transmetteur (UEi) et/ou de l'état de charge de la batterie dudit terminal mobile transmetteur (UEi), et **en ce que** lesdits moyens de traitement (MT) sont agencés pour déterminer certaines au moins desdites cartographies à partir desdites informations de type et/ou de version et/ou d'état de charge.

17. Serveur selon la revendication 16 en combinaison avec l'une des revendications 5 à 15, **caractérisé en ce que** lesdits moyens de traitement (MT) sont agencés pour stocker les données représentatives desdites cartographies, dans lesdits moyens de mémorisation (BD1), en correspondance desdites informations de type et/ou de version et/ou d'état de charge et/ou de type de service utilisé et/ou de type de contrat client/opérateur.

18. Système de gestion de réseau (NMS) pour un réseau de communication mobile comportant des cellules (Ci) dans lesquelles des terminaux mobiles de communication (UEi) peuvent établir des liaisons radio, **caractérisé en ce qu'**il comprend un serveur de gestion (SG) selon l'une des revendications précédentes.
